# EUROPÄISCHE PATENTSCHRIFT

(11) **EP 1 559 500 B1**
(45) Veröffentlichungstag und Bekanntmachung des Hinweises auf die Patenterteilung: **17.08.2011**
(21) Anmeldenummer: 04002033.1
(22) Anmeldetag: 29.01.2004
(51) Int. Cl.: B23P 6/00, F01D 5/00, B23P 15/02

(54) **Verfahren und Vorrichtung zum mechanischen Bearbeiten eines hohlen Bauteils**
Method and device for mechanical working of a hollow component
Procédé et dispositif d'usinage mécanique d'un composant creux

(43) Veröffentlichungstag der Anmeldung: 03.08.2005
(73) Patentinhaber: SIEMENS AKTIENGESELLSCHAFT, 80333 München (DE)
(72) Erfinder: Bublath, Boris, 13581 Berlin (DE); Goldschmidt, Dirk, Dr., 47445 Moers (DE); Heimberg, Beate, 45721 Haltern (DE); Hermann, Wolfgang, Dr., 45481 Mülheim (DE); Ott, Michael, Dr., 45478 Mülheim (DE)

(56) Entgegenhaltungen:
- WO-A-98/05921
- WO-A-2004/009440
- DE-A- 3 723 340
- US-A- 3 834 256
- US-A- 5 111 046
- US-A- 5 446 673
- US-A1- 2003 167 616
- PATENT ABSTRACTS OF JAPAN Bd. 0081, Nr. 08 (M-297), 19. Mai 1984 (1984-05-19) & JP 59 019655 A (IRIE KINZOKU KOGYO KK), 1. Februar 1984 (1984-02-01)

## Beschreibung

Die vorliegende Erfindung betrifft ein Verfahren zum mechanischen Bearbeiten eines hohlen Bauteils, insbesondere eines Turbinenbauteils, sowie eine Bearbeitungsvorrichtung zum Bearbeiten eines derartigen Bauteils.

Insbesondere bei einer mechanischen Bearbeitung der Außenseite eines hohlen Bauteils, wie sie bspw. während seiner Fertigung oder in Folge von Wartungsprozessen stattfindet, sind zumeist vorgegebene Mindestwandstärken einzuhalten. Dies gilt in besonderem Maße für mechanisch und/oder thermisch hoch belastete hohle Bauteile wie etwa Turbinenschaufeln, aber auch für Zylinderköpfe, Achsen etc. Beim Bearbeiten eines derartigen Bauteils sollen daher die Mindestwanddicken nicht unterschritten werden.

In der US 5,285,572 wird vorgeschlagen, das Reparieren einer Turbinenschaufel auf der Basis der Außenkontur der Schaufel vorzunehmen. Das Reparieren der Turbinenschaufel umfasst das Aufbringen einer Legierung auf die zu reparierenden Stellen, das Verschmelzen der Legierung mit der Turbinenschaufel und ein anschließendes mechanisches Bearbeiten, nämlich das Schleifen der Außenkontur zum Entfernen von störenden Legierungsresten. Um ein Unterschreiten der Mindestwandstärke durch das Schleifen zu vermeiden, wird in der US 5,285,572 vorgeschlagenen, vor dem Schleifen die Außenkontur der Turbinenschaufel zu ermitteln und an die Schleifmaschine weiterzugeben. Das Schleifen erfolgt dann unter Berücksichtigung der ermittelten Außenkontur, um eine Minimierung des abzuschleifenden Materials zu erzielen.

Die US 5,446,673 offenbart ein Verfahren und eine Vorrichtung zur Bearbeitung eines Bauteils, bei dem die äußere Oberfläche behandelt wird, damit eine minimale Wanddicke erhalten bleibt.

Die DE 37 32 340 A1 offenbart ein Verfahren zur Bearbeitung eines Bauteils, bei der im Inneren eine Nut eingefügt wird.

Die US 5,111,046 offenbart eine Apparatur und ein Verfahren zum Inspizieren von Kühlluftlöchern.

Die WO 98/05921 A1 offenbart ein Verfahren zur Wanddickenbestimmung an einer Turbinenschaufel.

Die US 2003/0167616 A1 offenbart ein Inspektionsverfahren eines zu reparierenden Bauteils, bei dem Schädigungen festgestellt werden, indem die Daten des Inspektionsverfahrens mit einem entsprechenden Datenprofil abgeglichen werden.

Die JP 59 019655 A1 offenbart eine Maschine, mit der Rohre mit gleich bleibender Dicke hergestellt werden können.

Die US 3,834,256 offenbart eine Vorrichtung, mit der mittels Ultraschall die innere Kontur eines hohlen Bauteils erfasst wird.

Die WO 2004/009440 A2 offenbart eine Methode zur Bearbeitung von Bauteilen mittels Ultraschall.

Höhere Belastungen von Turbinenbauteilen erfordern jedoch immer geringere Fertigungstoleranzen. Außerdem weisen Turbinenbauteile an der Innenseite des hohlen Bauteils häufig Innenkanäle zum Führen eines Kühlfluids auf, wobei das Kühlfluid durch Bohrungen zur Außenseite des Bauteils strömt und diese mit einem Kühlfluidfilm überzieht. Die Bohrungen, welche die Außenseite des Bauteils mit den Innenkanälen verbinden, müssen beim Einbringen genau nach den Innenkanälen ausgerichtet werden, damit die Bohrung den Kanal trifft.

Die Aufgabe der vorliegenden Erfindung besteht darin, ein verbessertes Verfahren zum Bearbeiten eines hohlen Bauteils zur Verfügung zu stellen.

Eine weitere Aufgabe der vorliegenden Erfindung besteht darin, eine verbesserte Bearbeitungsvorrichtung zum Bearbeiten eines hohlen Bauteils zur Verfügung zu stellen.

Die erste Aufgabe wird durch ein Verfahren zum mechanischen Bearbeiten eines hohlen Bauteils nach Anspruch 1 und die zweite Aufgabe durch eine Bearbeitungsvorrichtung nach Anspruch 14 gelöst.

Gegenüber der an die erfasste Außenkontur angepassten Bearbeitung bietet das erfindungsgemäße Bearbeitungsverfahren den Vorteil, dass beispielsweise Variationen in der Innenkontur von gleichartigen hohlen Bauteilen bei der Bearbeitung berücksichtigt werden können. Derartige Variationen entstehen bspw. beim Abguss von hohlen Turbinenbauteilen, wenn es zu Kernbewegungen und somit zu Verlagerungen bzw. Variationen der Innenkontur gegenüber der Außenkontur kommt. Kernbewegungen lassen sich nicht immer vermeiden, insbesondere, wenn die Kerne eine hohe Komplexität aufweisen, wie dies bspw. bei dünnen Innenkanälen mit vielen Mäandern der Fall ist. Die Komplexität der Gießkerne nimmt heutzutage immer mehr zu, was es erschwert, den Kern in Position zu halten.

Die beschriebenen Variationen oder Verlagerungen der Innenkontur, die sowohl zu Variationen in der Lage von Kühlfluidkanälen als auch zu Variationen in den Wanddicken der hohlen Bauteile führen können, können beim Bearbeiten des Bauteils auf der Basis der erfassten Außenkontur nicht adäquat berücksichtigt werden. Höher belastete Bauteile machen jedoch immer geringere Fertigungstoleranzen erforderlich. Verlagerungen bzw. Variationen der Innenkontur gegenüber der Außenkontur erschweren daher das Einhalten der minimalen Wanddicke beim Bearbeiten des Bauteils und Erhöhen den Ausschuss beim Bearbeiten.

Das erfindungsgemäße Verfahren ermöglicht es, die Verlagerungen und Variationen der Innenkontur beim Bearbeiten des Bauteils zu berücksichtigen. Dabei können bspw. nach auffüllenden Reparaturverfahren die äußeren Konturen des Bauteils in Relation zu den Innenkonturen wieder optimal eingestellt werden, wenn während der Neufertigung des Bauteils Daten, etwa in Form von Datengittern, welche seine Konturen definieren, hinterlegt werden. Dieselben Daten können außerdem auch zum Wiederöffnen von Kühlluftbohrungen nach dem Reparieren des Bauteils bspw. mittels einer Legierung genutzt werden.

Außer beim Warten von hohlen Bauteilen ist das erfindungsgemäße Verfahren jedoch auch bei der Neufertigung vorteilhaft. Das erfindungsgemäße Verfahren ermöglicht es, den Ausschuss beim Einbringen von Kühlluftbohrungen zu verringern, da durch das Erfassen der Innenkontur die Lage der Innenkanäle genauestens bekannt ist. Aufwendige Nacharbeitungen im Falle von Fehlbohrungen lassen sich dadurch vermeiden. Das Einbringen von Kühlluftbohrungen in extrem schmale oder komplexe Innenkanäle wird hierdurch wirtschaftlich und zum Teil auch technisch überhaupt erst machbar.

Schließlich kann mit dem erfindungsgemäßen Verfahren auch die Kühlung durch eine an die erfasste Innenkontur angepasste Bearbeitung der Außenwände optimiert werden. In einem solchen Fall sollte die kritische Außenkontur mit Aufmaß versehen werden.

Als mechanische Bearbeitungen kommen im erfindungsgemäßen Verfahren insbesondere spanende Bearbeitungen wie etwa Bohren oder Schleifen in Betracht. Das Anpassen des mechanischen Bearbeitens an die erfasste Innenkontur kann dabei bspw. dadurch erfolgen, dass das Bauteil oder das Werkzeug entsprechend der erfassten Innenkontur für die Bearbeitung ausgerichtet wird.

Für das Erfassen der Innenkontur des Bauteils kommen verschiedene Verfahren in Betracht. Beispielsweise kann die Innenkontur mittels eines Röntgenverfahrens oder mittels Computertomographie erfasst werden. Alternativ ist es auch möglich, zum Erfassen der Innenkontur ein thermografisches Verfahren zu verwenden. Dabei wird zwischen der Innenkontur und der Außenkontur eine Temperaturdifferenz hergestellt und die Temperaturverteilung der Innen- oder der Außenkontur thermografisch vermessen. Aus der Temperaturverteilung wird dann die Innenkontur des Bauteils ermittelt. Das thermografische Verfahren zeichnet sich bspw. gegenüber dem Röntgenverfahren oder der Computertomographie durch einen relativ einfachen apparativen Aufbau aus.

Zum Herstellen der Temperaturdifferenz zwischen der Innenkontur und der Außenkontur kann eine der beiden Konturen einem kalten oder einem heißen Medium ausgesetzt werden. Die Temperaturdifferenz des kalten bzw. des heißen Mediums gegenüber der Umgebungstemperatur ist dabei so groß zu wählen, dass im Bauteil eine thermografisch vermessbare Temperaturverteilung entsteht. Alternativ kann die Temperaturdifferenz zwischen der Innenkontur und der Außenkontur auch dadurch erzeugt werden, dass eine der beiden Konturen einer sie erwärmenden Strahlungsquelle ausgesetzt wird.

Außer mittels Röntgenverfahren oder thermografischer Verfahren kann die Innenkontur des Bauteils auch mit einem Verfahren erfasst werden, in welchem eine Messung der Wanddicke des Bauteils an ausgewählten Messorten erfolgt. Das Messen der Wanddicke kann dabei beispielsweise mittels Ultraschall oder, falls das Bauteil aus einem leitfähigen Material hergestellt ist, mittels Wirbelstrom erfolgen.

Neben dem Erfassen der Innenkontur ist es im Rahmen des erfindungsgemäßen Verfahrens auch möglich, zusätzlich die Außenkontur des hohlen Bauteils zu erfassen.

Die erfindungsgemäße Bearbeitungsvorrichtung eignet sich zum Durchführen des erfindungsgemäßen Verfahrens. Die Kenntnis der Innenkontur des Bauteils versetzt die Justiereinheit in die Lage, Verlagerungen bzw. Variationen der Innenkontur gegenüber der Außenkontur auszugleichen, und ermöglicht so ein hoch präzises mechanisches Bearbeiten des Bauteils.

Zum Erfassen der Innenkontur umfasst die Messeinrichtung in einer Ausgestaltung der erfindungsgemäßen Bearbeitungsvorrichtung einen Röntgen-Computertomographen.

In einer alternativen Ausgestaltung der erfindungsgemäßen Bearbeitungsvorrichtung umfasst die Messeinrichtung zum Erfassen der Innenkontur mindestens einen Ultraschall-Messsensor oder mindestens einen Wirbelstrom-Messsensoren zum Anbringen an ausgewählten Messorten des Bauelements.

In einer weiteren alternativen Ausgestaltung der erfindungsgemäßen Bearbeitungsvorrichtung umfasst die Messeinrichtung eine thermografische Kamera sowie eine Einrichtung zum Herstellen einer Temperaturdifferenz zwischen der Innenkontur und der Außenkontur des hohlen Bauteils. Die Einrichtung zum Herstellen der Temperaturdifferenz kann dabei eine Kühl- oder Heizmediumzufuhr zur Innen- oder Außenkontur des Bauteils umfassen. Die Temperatur des zugeführten Kühloder Heizmediums wird dabei derart gewählt, dass die Temperaturdifferenz eine mit der thermografischen Kamera erfassbare Temperaturverteilung auf der Außenkontur des Bauteils erzeugt. Statt einer Kühl- oder Heizmediumzufuhr kann die Einrichtung zum Herstellen einer Temperaturdifferenz jedoch auch eine Strahlungsquelle, bspw. eine Infrarotlichtquelle, zum Bestrahlen der Außenkontur oder der Innenkontur des Bauteils umfassen. Auch das Herstellen der Temperaturdifferenz mittels Einstrahlung hochfrequenter Wechselfelder ist grundsätzlich möglich.

Weitere Merkmale, Eigenschaften und Vorteile der vorliegenden Erfindung ergeben sich aus der nachfolgenden Beschreibung von Ausführungsbeispielen, unter Bezugnahme auf die beiliegenden Zeichnungen.
Fig. 1 zeigt ein Ausführungsbeispiel für die erfindungsgemäße Bearbeitungsvorrichtung in einer schematischen Darstellung.
Fig. 2 zeigt ein Beispiel für eine Bearbeitungsvorrichtung in einer schematischen Darstellung.
Fig. 3 zeigt ein weiteres Beispiel für eine Bearbeitungsvorrichtung in einer schematischen Darstellung.

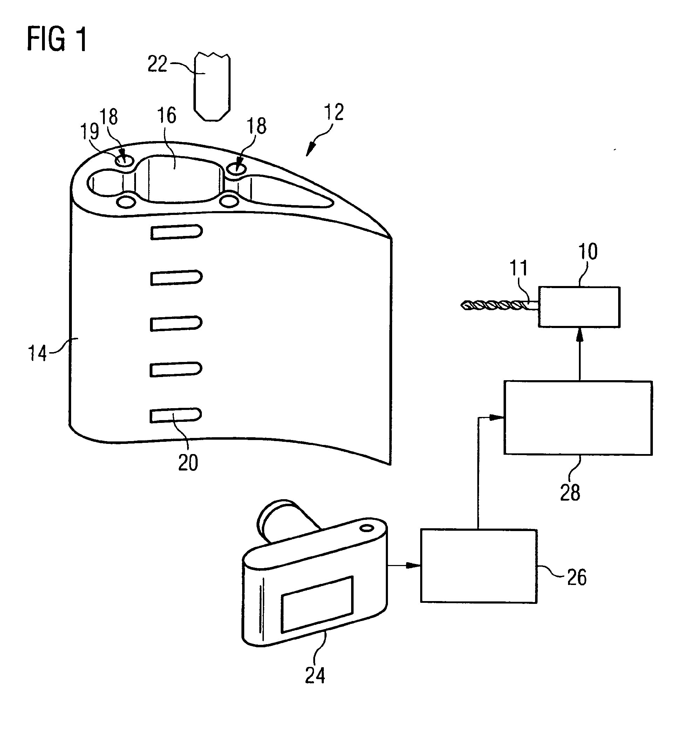

Figur 1 zeigt als ein Ausführungsbeispiel für die erfindungsgemäße Bearbeitungsmaschine eine

Bearbeitungsmaschine mit einem beweglichen Bohrwerkzeug 10 als Bearbeitungseinrichtung zum Bearbeiten des hohlen Bauteils. Als hohles Bauteil 12 ist in Figur 1 in stark vereinfachter Weise eine Turbinenschaufel 12 dargestellt. Die Turbinenschaufel 12 weist eine Außenfläche 14 auf, welche die Außenkontur der Turbinenschaufel 12 festlegt, und eine Innenfläche 16, welche eine Innenkontur der Turbinenschaufel 12 festlegt. Zusätzlich weist die Turbinenschaufel 12 Innenkanäle 18 auf, die im Inneren der Turbinenschaufel 12 angeordnet sind und als Kühlluftkanäle zum Zuführen von Kühlluft als ein Kühlfluid dienen. Die Innenflächen 19 der Kühlluftkanäle 18 stellen eine weitere Innenkontur der Turbinenschaufel 12 dar.

Aufgabe des Bohrwerkzeuges 10 ist es, Kühlluftbohrungen 20 in die Außenfläche 14 der Turbinenschaufel 12 derart einzubringen, dass die Kühlluftbohrungen 20 die Außenfläche 14 mit den Kühlluftkanälen 18 verbinden. Im Betrieb der Turbinenschaufel 12 dienen diese Kühlluftbohrungen 20 dazu, einen Teil der durch die Kühlluftkanäle 18 strömenden Kühlluft entlang der Außenfläche 14 der Turbinenschaufel 12 zu leiten und so einen kühlenden Film um die Außenfläche 14 zu erzeugen.

Beim Bohren der Kühlluftbohrungen 20 müssen die Kühlluftkanäle 18 getroffen werden. Es ist daher notwendig die Lage der Kühlluftkanäle 18 relativ zur Außenfläche 14 der Turbinenschaufel 12 zu kennen. Wie bereits in der Beschreibungseinleitung erwähnt, führen jedoch Bewegungen des Gießkerns beim Gießen der Turbinenschaufel 12 dazu, dass die Innenkonturen 16, 19 Verlagerungen oder Variationen erfahren können. Insbesondere bei steigender Komplexität der Kerne, beispielsweise aufgrund dünner Kühlkanäle mit vielen Mäandern, ergeben sich einerseits größere Kernbewegungen, also größere Verlagerungen bzw. Variationen der Innenkonturen gegenüber der Außenkontur, und andererseits ist eine höhere Präzision beim Einbringen der Kühlluftbohrungen 20 nötig, um auch wirklich die dünnen Kühlkanäle 18 beim Bohren zu treffen.

In der erfindungsgemäßen Bearbeitungsvorrichtung gemäß dem Ausführungsbeispiel ist daher eine Messeinrichtung zum Erfassen mindestens einer der Innenkonturen 16, 19 der Turbinenschaufel 12 vorhanden. Das Einbringen der Kühlluftbohrungen 20 erfolgt dann unter Berücksichtigung der Lage der erfassten Innenkonturen 16, 19 relativ zur Außenkontur 14 der Turbinenschaufel 12, so dass die Kühlluftkanäle 18 exakt angebohrt werden können. Dadurch lässt sich der Ausschuss an Turbinenschaufeln 12, der aufgrund von Fehlbohrungen entsteht, verringern. Auch kann das aufwendige Nachbearbeiten im Falle von Fehlbohrungen vermieden werden.

Im Ausführungsbeispiel umfasst die Messeinrichtung zum Erfassen mindestens einer Innenkontur 16, 19 der Turbinenschaufel 12 eine Heizmittelzufuhr 22, mit der den Innenkonturen 16, 19 ein Heizmittel zugeführt werden kann. Mittels einer thermografischen Kamera 24 wird die Temperaturverteilung an der Außenfläche 14 der Turbinenschaufel 12 gemessen und an einen Rechner 26, der ebenfalls Bestandteil der Messeinrichtung sein kann, ausgegeben. Im Rechner 26 berechnet eine geeignete Software aus der gemessenen Temperaturverteilung die Innenkontur 16, 19 der Turbinenschaufel 12 und gibt ein die Innenkontur 16, 19 repräsentierendes Kontursignal aus.

Als Heizmittel, welches den Innenkonturen 16, 19 der Turbinenschaufel 12 zugeführt wird, findet vorzugsweise ein Heizfluid, das im einfachsten Fall Heißluft sein kann, Verwendung. Aber auch andere Heizfluide mit einer höheren Wärmekapazität als Luft, beispielsweise Heizflüssigkeiten, können zugeführt werden.

Da es für das Erfassen der Innenkontur 16, 19 nur darauf ankommt, eine Temperaturdifferenz zwischen der Innenkontur 16, 19 und der Außenkontur 14 zu erzeugen, kann statt eines Heizmittels auch ein Kühlmittel, beispielsweise Kühlluft oder Kühlflüssigkeit, zugeführt werden. Als Kühlflüssigkeit kann im vorliegenden Ausführungsbeispiel bspw. flüssiger Stickstoff Verwendung finden.

In einer alternativen Ausgestaltung der Messeinrichtung findet statt einer Heiz- oder Kühlmittelzufuhr 22 eine Strahlungsquelle Anwendung (nicht dargestellt), welche der Innenkontur 16, 19 eine aufheizende Strahlung zuführt. Es soll nicht unerwähnt bleiben, dass statt der Innenkonturen 16, 19 auch die Außenkontur 14 geheizt oder gekühlt werden kann. In diesem Fall muss die thermografische Kamera 24 jedoch die Temperaturverteilung der Innenkonturen 16, 19 erfassen. Diese Ausgestaltung ist nur dann realisierbar, wenn die von den Innenkonturen 16, 19 umschlossenen Volumina groß genug sind, um die thermografische Kamera 24 aufzunehmen zu können. Diese Ausgestaltung eignet sich daher bei Bauteilen mit großen Innenvolumen und/oder Messeinrichtungen mit kleinen thermografischen Kameras.

Die Bearbeitungsmaschine umfasst das bewegliche Bohrwerkzeug 10 und eine Werkzeugsteuerung 28, die zum Empfang des Kontursignals mit dem Rechner 26 in Signalverbindung steht. Auf der Basis des Kontursignals ermittelt die Werkzeugsteuerung 28 die an die Justiereinrichtung (nicht dargestellt) zum Justieren des beweglichen Bohrwerkzeuges 10 auszugebenden Steuersignale. Anhand dieser Steuersignale wird das bewegliche Bohrwerkzeug 10 derart ausgerichtet, dass der Bohrer 11 beim Einbringen der Kühlluftbohrungen die Innenkanäle 18 der Turbinenschaufel 12 trifft.

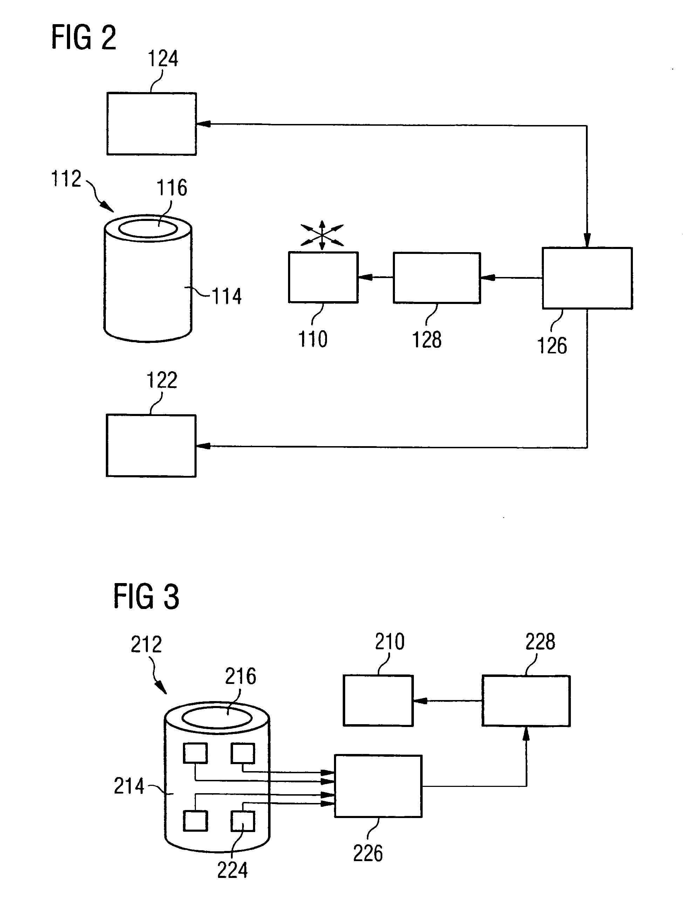

Figur 2 stellt ein Beispiel für eine Bearbeitungsmaschine dar. Das in Figur 2 sehr schematisch dargestellte Bauteil 112 kann beispielsweise eine Hohlwelle darstellen. Wichtig ist für das Ausführungsbeispiel jedoch nur, dass das Bauteil eine Außenkontur 114 und eine Innenkontur 116 aufweist. Zum Bearbeiten des Bauteils 112 weist die Bearbeitungsvorrichtung ein bewegliches Schleifwerkzeug 110 auf, dessen Position aufgrund von Steuerdaten, die von einer Werkzeugsteuerung 128 zur Verfügung gestellt werden, justiert wird. Wie im Ausführungsbeispiel für die Erfindung empfängt die Werkzeugsteuerung 128 ein Kontursignal mit Konturdaten, welche die Innenkontur 116 des Bauteils 112 repräsentieren, und ermittelt die Steuerdaten auf der Basis des empfangenen Kontursignals.

Die Messeinrichtung zum Erfassen der Innenkontur 116 des Bauteils 112 und zum Ausgeben des Kontursignals ist im vorliegenden Ausführungsbeispiel ein Computertomograph. Dieser umfasst eine Röntgenstrahlungsquelle 122 und eine Aufnahmeeinheit 124 für Röntgenstrahlen, die beide mit einem Computer 126 in Verbindung stehen. Der Computer 126 steuert einerseits die Röntgenstrahlungsquelle 122 und die Aufnahmeeinheit 124 für Röntgenstrahlen und empfängt andererseits von der Aufnahmeeinheit 124 Daten, welche die aufgenommene Röntgenstrahlung repräsentieren. Aus diesen Daten ermittelt der Computer 126 die Innenkontur 116 des Bauteils 112 und gibt ein die Innenkontur 116 repräsentierendes Kontursignal an die Werkzeugsteuerung 128 aus. Die Arbeitsweise eines Computertomographen ist grundsätzlich bekannt und soll daher an dieser Stelle nicht näher erläutert werden.

Mit der Bearbeitungsvorrichtung gemäß Beispiel für eine Bearbeitungsmaschine ist es möglich, ein Schleifen der Außenkontur 114 des Bauteils 112 unter Berücksichtigung der Innenkontur 116 vorzunehmen. Dies ermöglicht es beispielsweise, wenn das Bauteil eine Turbinenschaufel mit Kühlluftkanälen und Kühlluftbohrungen ist, die Außenkontur derart zu optimieren, dass die Kühlluftströmung entlang der Außenkontur der Turbinenschaufel optimiert wird. In diesem Fall sollte jedoch die kritische Außenkontur mit Aufmass versehen werden. Außerdem ist es möglich, die Außenkontur einer Turbinenschaufel nach auffüllenden Reparaturverfahren in Relation zur Innenkontur wieder optimal einzustellen. Zu diesem Zweck können während der Neufertigung des Bauteils Daten hinterlegt werden, welche seine Innenkonturen und die Außenkonturen repräsentieren. Dieselben Daten können nach auffüllenden Reparaturverfahren auch dazu verwendet werden, beim Auffüllen verschlossene Kühlluftbohrungen wieder zu öffnen.

Ein weiteres Beispiel für eine Bearbeitungsmaschine ist in Figur 3 dargestellt. Diese Ausführungsform umfasst ein justierbares Schleifwerkzeug 210 zum Bearbeiten eines hohlen Bauteils 212 sowie eine Werkzeugsteuerung 228, die Steuersignale zum Justieren des justierbaren Schleifwerkzeugs 210 an eine nicht dargestellte Justiereinrichtung zum Justieren des Schleifwerkzeugs 210 ausgibt. Das justierbare Schleifwerkzeug 210, die Werkzeugsteuerung 228 und das Bauteil 212 unterscheiden sich nicht vom justierbaren Schleifwerkzeug 110, der Werkzeugsteuerung 128 und dem Bauteil 112 des zuvor beschriebenen Beispiels für eine Bearbeitungsmaschine und werden daher nicht noch einmal erläutert.

Vom zuvor beschriebenen Beispiels für eine Bearbeitungsmaschine unterscheidet sich das weitere Beispiel dadurch, dass zum Ermitteln der Innenkontur 216 des Bauteils 212 mehrere Ultraschall-Messsensoren 224 vorhanden sind, die an ausgewählten Messorten der Außenkontur 214 des Bauteils 212 angeordnet werden und die Wanddicke des Bauteils 212 vermessen. Wenn die Außenkontur des Bauteils 212 bekannt ist, lässt sich aus der ermittelten Wanddicke die Innenkontur 216 des Bauteils 212 ermitteln. Dazu werden die von den Ultraschall-Messsensoren 224 aufgenommenen Messsignale an einen Rechner 226 ausgegeben, der aus den Signalen und der Außenkontur 214 die Innenkontur 216 ermittelt und ein Kontursignal, welches die Innenkontur 216 repräsentiert, an die Werkzeugsteuerung 228 ausgibt. Ggf. kann das Messen der Wanddicke auch mit einem einzigen Messsensor erfolgen, der nacheinander Messorte der Außenkontur 214 anfährt und dort die Messung durchführt.

Die Bearbeitungsvorrichtung des weiteren Beispiels für eine Bearbeitungsmaschine umfasst darüber hinaus vorzugsweise auch eine Einrichtung zum Ermitteln der Außenkontur 214 des Werkstücks 212. Selbstverständlich können auch die Bearbeitungsvorrichtungen des anderen Beispiels oder des Ausführungsbeispiels für die Erfindung eine geeignete Vorrichtung zum Ermitteln der Außenkontur des Bauteils umfassen.

Statt der Ultraschall-Messsensoren 224 kann die Messeinrichtung des weiteren Beispiels für eine Bearbeitungsmaschine in einer alternativen Ausgestaltung auch einen oder mehrere Wirbelstrom-Messsensoren oder sonstige geeignete Sensoren zum Ermitteln der Wandstärke des Bauteils umfassen.

Die Bearbeitungsvorrichtungen des Ausführungsbeispiels und der Beispiels für eine Bearbeitungsmaschine weisen Bohrwerkzeuge oder Schleifwerkzeuge als Bearbeitungswerkzeuge auf. Sie können jedoch alternativ oder zusätzlich auch andere spanende oder abtragende Werkzeuge, beispielsweise Fräswerkzeuge oder Polierwerkzeuge umfassen.

In den Bearbeitungsvorrichtungen des Ausführungsbeispiels und der Beispiels für eine Bearbeitungsmaschine wurde jeweils das Werkzeug justiert. Alternativ ist es jedoch auch möglich, das Bauteil oder sowohl das Bauteil als auch das Werkzeug zu justieren.

## Patentansprüche

1. Verfahren zum mechanischen Bearbeiten einer hohlen Turbinenschaufel,
welche eine Außenkontur (14, 114, 214), eine Innenkontur (16, 18, 19, 116, 216) und Innenkanäle (18) aufweist,
bei dem eine Innenkontur (16, 18, 19, 116, 216) der Turbinenschaufel erfasst wird und das mechanische Bearbeiten angepasst an die erfasste Kontur erfolgt, wobei Kühlluftbohrungen (20) in die Turbinenschaufel eingebracht werden,
die die Innenkanäle (18) im Innern der Turbinenschaufel treffen,
wobei die Innenkanäle als Kühlluftkanäle (18) dienen.

2. Verfahren nach Anspruch 1,
**dadurch gekennzeichnet,**
**dass** das Anpassen des mechanischen Bearbeitens der Turbinenschaufel an die erfasste Innenkontur (16, 19, 116, 216) erfolgt, indem die Turbinenschaufel und/oder ein bearbeitendes Werkzeug (10, 110, 210) entsprechend der erfassten Innenkontur (16, 19, 116, 216) ausgerichtet wird.

3. Verfahren nach Anspruch 1 oder 2,
**dadurch gekennzeichnet,**
**dass** das Erfassen der Innenkontur (116) der Turbinenschaufel anhand eines Röntgenverfahren oder eines computertomographischen Verfahrens erfolgt.

4. Verfahren nach Anspruch 1 oder 2,
**dadurch gekennzeichnet,**
**dass** das Erfassen der Innenkontur (16, 19) der Turbinenschaufel anhand eines thermografischen Verfahrens erfolgt.

5. Verfahren nach Anspruch 4,
**dadurch gekennzeichnet,**
**dass** zum Durchführen des thermografischen Verfahrens eine Temperaturdifferenz zwischen der Innenkontur (16, 19) und der Außenkontur (14) hergestellt wird und ein thermografisches Vermessen der Temperatur der Innen- oder der Außenkontur erfolgt.

6. Verfahren nach Anspruch 5,
**dadurch gekennzeichnet,**
**dass** zum Herstellen der Temperaturdifferenz die Innenkontur (16, 19) oder die Außenkontur (14) der Turbinenschaufel einem kalten oder heißen Medium ausgesetzt wird.

7. Verfahren nach Anspruch 5,
**dadurch gekennzeichnet,**
**dass** zum Herstellen der Temperaturdifferenz die Innenkontur (16, 19) oder die Außenkontur (14) einer sie erwärmenden Strahlungsquelle ausgesetzt wird.

8. Verfahren nach Anspruch 1 oder 2,
**dadurch gekennzeichnet,**
**dass** die Innenkontur (216) der Turbinenschaufel erfasst wird, indem eine Messung der Wanddicke des Bauteils (212) an ausgewählten Messorten erfolgt.

9. Verfahren nach Anspruch 8,
**dadurch gekennzeichnet,**
**dass** die Messung der Wanddicke mittels Ultraschall erfolgt.

10. Verfahren nach Anspruch 8,
**dadurch gekennzeichnet,**
**dass** die Messung der Wanddicke mittels Wirbelstrom erfolgt.

11. Verfahren nach einem der vorangehenden Ansprüche,
**dadurch gekennzeichnet,**
**dass** sowohl ein Erfassen der Innenkontur (16, 19, 116, 216) als auch zum Erfassen der Außenkontur (14, 114, 214) der hohlen Turbinenschaufel erfolgt.

12. Verfahren nach einem der vorangehenden Ansprüche,
**dadurch gekennzeichnet,**
**dass** das es als Teil eines Herstellungsverfahrens zur Neuherstellung einer Turbinenschaufel ausgestaltet ist.

13. Verfahren nach einem der vorangehenden Ansprüche,
**dadurch gekennzeichnet,**
**dass** es als Teil eines Wartungsverfahrens zur Wartung einer Turbinenschaufel ausgestaltet ist.

14. Bearbeitungsvorrichtung zum Bohren einer hohlen Turbinenschaufel,
welche eine Außenkontur (14), eine Innenkontur (16, 19) und Innenkanäle (18) aufweist, mit
- einer Messeinrichtung (24, 26) zum Erfassen von Innenkanälen (18) im Innern der Turbinenschaufel und zum Ausgeben eines die erfassten Innenkanäle repräsentierenden Kontursignals ,
- einer mit der Messeinrichtung (24, 26) zum Empfang des Kontursignals verbundenen Werkzeugsteuerung (28) zum Ermitteln von Steuersignalen zum Justieren eines Bohrwerkzeugs (10) auf der Basis des empfangenen Kontursignals und
- einer mit der Werkzeugsteuerung (28) zum Empfang der Steuersignale verbundenen Justiereinheit zum Justieren der Turbinenschaufel und/oder des die Turbinenschaufel bearbeitenden Bohrwerkzeugs (10) anhand der empfangenen Steuersignale,
wobei anhand der Steuersignale das Bohrwerkzeug und/oder die Turbinenschaufel derart ausgerichtet wird, dass es die Innenkanäle (18) beim Bohren trifft.

15. Bearbeitungsvorrichtung nach Anspruch 14,
**dadurch gekennzeichnet,**
**dass** die Messeinrichtung einen Computertomographen (122, 124, 126) umfasst.

16. Bearbeitungsvorrichtung nach Anspruch 14,
**dadurch gekennzeichnet,**
**dass** die Messeinrichtung mindestens einen Ultraschall-Messsensor (224) oder mindestens einen Wirbelstrom-Messsensor zum Anbringen an ausgewählten Messorten der Turbinenschaufel umfasst.

17. Bearbeitungsvorrichtung nach Anspruch 14,
**dadurch gekennzeichnet,**
**dass** die Messeinrichtung eine thermografische Kamera (24) und eine Einrichtung (22) zum Herstellen einer Temperaturdifferenz zwischen der Innenkontur (16, 19) und der Außenkontur (14) der Turbinenschaufel umfasst.

18. Bearbeitungsvorrichtung nach Anspruch 17,
**dadurch gekennzeichnet,**
**dass** die Einrichtung zum Herstellen einer Temperaturdifferenz eine Kühl- oder Heizmediumzufuhr (22) zur Innenoder Außenkontur der Turbinenschaufel umfasst.

19. Bearbeitungsvorrichtung nach Anspruch 17,
**dadurch gekennzeichnet,**
**dass** die Einrichtung zum Herstellen einer Temperaturdifferenz eine Strahlungsquelle umfasst.

## Claims

1. Method for machining a hollow turbine blade, which has an external contour (14, 114, 214), an internal contour (16, 18, 19, 116, 216) and internal channels (18), in which an internal contour (16, 18, 19, 116, 216) of the turbine blade is recorded and the machining is performed in a manner adapted to the recorded contour, cooling air bores (20), which meet the internal channels (18) inside the turbine blade, being introduced into the turbine blade and the internal channels serving as cooling air channels (18).

2. Method according to Claim 1, **characterized in that** the adaptation of the machining of the turbine blades to the recorded internal contour (16, 19, 116, 216) is performed by aligning the turbine blade and/or a machining tool (10, 110, 210) in a manner corresponding to the recorded internal contour (16, 19, 116, 216).

3. Method according to Claim 1 or 2, **characterized in that** the recording of the internal contour (116) of the turbine blade is performed on the basis of an x-ray process or a computerized tomographic process.

4. Method according to Claim 1 or 2, **characterized in that** the recording of the internal contour (16, 19) of the turbine blade is performed on the basis of a thermographic process.

5. Method according to Claim 4, **characterized in that**, to carry out the thermographic process, a temperature difference between the internal contour (16, 19) and the external contour (14) is established and a thermographic measurement of the temperature of the internal contour or the external contour is performed.

6. Method according to Claim 5, **characterized in that**, to establish the temperature difference, the internal contour (16, 19) or the external contour (14) of the turbine blade is exposed to a cold or hot medium.

7. Method according to Claim 5, **characterized in that**, to establish the temperature difference, the internal contour (16, 19) or the external contour (14) is exposed to a radiation source heating it.

8. Method according to Claim 1 or 2, **characterized in that** the internal contour (216) of the turbine blade is recorded by a measurement of the wall thickness of the component (212) being performed at selected measuring locations.

9. Method according to Claim 8, **characterized in that** the measurement of the wall thickness is performed by means of ultrasound.

10. Method according to Claim 8, **characterized in that** the measurement of the wall thickness is performed by means of eddy current.

11. Method according to one of the preceding claims, **characterized in that** both a recording of the internal contour (16, 19, 116, 216) and a recording of the external contour (14, 114, 214) of the hollow turbine blade are performed.

12. Method according to one of the preceding claims, **characterized in that** it is devised as part of a production process for the new production of a turbine blade.

13. Method according to one of the preceding claims, **characterized in that** it is devised as part of a servicing process for servicing a turbine blade.

14. Machining device for drilling a hollow turbine blade, which has an external contour (14), an internal contour (16, 19) and internal channels (18), with
- a measuring device (24, 26) for recording internal channels (18) inside the turbine blade and for outputting a contour signal representing the recorded internal channels,
- a tool controller (28), connected to the measuring device (24, 26) for receiving the contour signal, to determine control signals for adjusting a drilling tool (10) on the basis of the received contour signal and
- an adjusting unit, connected to the tool controller (28) for receiving the control signals, to adjust the turbine blade and/or the drilling tool (10) machining the turbine blade on the basis of the received control signals,
- the drilling tool and/or the turbine blade being aligned on the basis of the control signals in such a way that it meets the internal channels (18) during drilling.

15. Machining device according to Claim 14, **characterized in that** the measuring device comprises a computerized tomograph (122, 124, 126).

16. Machining device according to Claim 14, **characterized in that** the measuring device comprises at least one ultrasonic measuring sensor (224) or at least one eddy current measuring sensor for attachment at selected measuring locations of the turbine blade.

17. Machining device according to Claim 14, **characterized in that** the measuring device comprises a thermographic camera (24) and a device (22) for establishing a temperature difference between the internal contour (16, 19) and the external contour (14) of the turbine blade.

18. Machining device according to Claim 17, **characterized in that** the device for establishing a temperature difference comprises a cooling or heating medium feed (22) to the internal or external contour of the turbine blade.

19. Machining device according to Claim 17, **characterized in that** the device for establishing a temperature difference comprises a radiation source.

## Revendications

1. Procédé d'usinage mécanique d'une aube creuse de turbine, qui a un contour ( 14, 114, 214 ) extérieur, un contour ( 16, 18, 19, 116, 216) intérieur et des canaux ( 18 ) intérieurs,
dans lequel on détecte un contour ( 16, 18, 19, 116, 216 ) intérieur de l'aube de la turbine et on effectue l'usinage mécanique d'une manière adaptée au contour détecté,
dans lequel on ménage des trous ( 20 ) pour de l'air de refroidissement dans l'aube de turbine,
qui rencontrent les canaux ( 18 ) intérieurs à l'intérieur de l'aube de turbine,
les canaux intérieurs servant de canaux ( 18 ) pour de l'air de refroidissement.

2. Procédé suivant la revendication 1,
**caractérisé**
**en ce qu'**on effectue l'adaptation de l'usinage mécanique de l'aube de turbine au contour ( 16, 18, 19, 116, 216 ) intérieur détecté en orientant l'aube de turbine et/ou un outil ( 10, 110, 210 ) d'usinage conformément au contour ( 16, 18, 19, 116, 216 ) intérieur détecté.

3. Procédé suivant la revendication 1 ou 2,
**caractérisé**
**en ce qu'**on effectue la détection du contour (116) intérieur de l'aube de turbine au moyen d'un procédé aux rayons X ou d'un procédé de tomographie par ordinateur.

4. Procédé suivant la revendication 1 ou 2,
**caractérisé**
**en ce qu'**on effectue la détection du contour ( 16, 19 ) intérieur de l'aube de turbine au moyen d'un procédé thermographique.

5. Procédé suivant la revendication 4,
**caractérisé**
**en ce que**, pour effectuer le procédé thermographique, on produit une différence de température entre le contour ( 16, 19 ) intérieur et le contour ( 14 ) extérieur et on effectue une mesure thermographique de la température du contour intérieur ou du contour extérieur.

6. Procédé suivant la revendication 5,
**caractérisé**
**en ce que**, pour la production de la différence de température, on soumet le contour ( 16, 19 ) intérieur ou le contour (14) extérieur de l'aube de turbine à un fluide froid ou chaud.

7. Procédé suivant la revendication 5,
**caractérisé**
**en ce que**, pour produire la différence de température, on soumet le contour ( 16, 19 ) intérieur ou le contour ( 14 ) extérieur à une source de rayonnement chauffante.

8. Procédé suivant la revendication 1 ou 2,
**caractérisé**
**en ce qu'**on détecte le contour ( 216 ) intérieur de l'aube de turbine en effectuant une mesure de l'épaisseur de la paroi de l'élément ( 212 ) en des points de mesure sélectionnés.

9. Procédé suivant la revendication 8,
**caractérisé**
**en ce qu'**on effectue la mesure de l'épaisseur de la paroi par ultrasons.

10. Procédé suivant la revendication 8,
**caractérisé**
**en ce qu'**on effectue la mesure de l'épaisseur de la paroi au moyen d'un courant de Foucauld.

11. Procédé suivant l'une des revendications précédentes,
**caractérisé**
**en ce qu'**on effectue à la fois une détection du contour ( 16, 18, 19, 116, 216 ) intérieur et une détection du contour ( 14, 114, 214 ) extérieur de l'aube de turbine creuse.

12. Procédé suivant l'une des revendications précédentes,
**caractérisé**
**en ce qu'**il est prévu comme partie d'un procédé de fabrication pour la production à nouveau d'une aube de turbine.

13. Procédé suivant l'une des revendications précédentes,
**caractérisé**
**en ce qu'**il est prévu comme partie d'un procédé d'entretien pour l'entretien d'une aube de turbine.

14. Dispositif d'usinage pour l'alésage d'une aube de turbine creuse,
qui a un contour ( 14 ) extérieur et un contour ( 16, 19 ) intérieur et des canaux ( 18 ) intérieurs, comprenant
- un dispositif ( 24, 26 ) de mesure pour la détection de canaux ( 18 ) intérieurs à l'intérieur de l'aube de turbine et pour l'émission d'un signal de contour représentant les canaux intérieurs détectés,
- une commande ( 28 ) d'outil, qui est reliée au dispositif ( 24, 26 ) de mesure pour la réception du signal de contour et qui est destinée à déterminer des signaux de commande pour l'ajustement d'un outil ( 10 ) d'alésage sur la base du signal de contour reçu,
- une unité d'ajustement, qui est reliée à la commande ( 28 ) d'outil pour la réception des signaux de commande et qui est destinée à l'ajustement de l'aube de turbine et/ou de l'outil ( 10 ) d'alésage usinant l'aube de turbine au moyen des signaux de commande reçus,
dans lequel au moyen des signaux de commande l'outil d'alésage et/ou l'aube de turbine est orienté de manière à rencontrer les canaux ( 18 ) intérieurs lors de l'alésage.

15. Dispositif d'usinage suivant la revendication 14,
**caractérisé**
**en ce que** le dispositif de mesure comprend un tomographe ( 122, 124, 126 ) à ordinateur.

16. Dispositif d'usinage suivant la revendication 14,
**caractérisé**
**en ce que** le dispositif de mesure comprend au moins un capteur ( 224 ) de mesure par ultrasons ou au moins un capteur de mesure à courant de Foucauld à mettre en des points de mesure sélectionnés de l'aube de turbine.

17. Dispositif d'usinage suivant la revendication 14,
**caractérisé**
**en ce que** le dispositif de mesure comprend une caméra ( 24 ) thermographique et un dispositif ( 22 ) de production d'une différence de température entre le contour ( 16, 19 ) intérieur et le contour ( 14 ) extérieur de l'aube de turbine.

18. Dispositif d'usinage suivant la revendication 17,
**caractérisé**
**en ce que** le dispositif de production d'une différence de température comprend un apport ( 22 ) de fluide de refroidissement ou de chauffage au contour intérieur ou au contour extérieur de l'aube de turbine.

19. Dispositif d'usinage suivant la revendication 17,
**caractérisé**
**en ce que** le dispositif de production d'une différence de température comprend une source de rayonnement.
